# EUROPEAN PATENT APPLICATION

(11) **EP 4 822 468 A1**
(43) Date of publication of application: **14.10.2026**
(21) Application number: 25169087.1
(22) Date of filing: 08.04.2025
(51) Int. Cl.: G05B 19/418, G06N 5/022

(54) **METHOD FOR OPTIMIZING AN INDUSTRIAL AUTOMATIZATION PROCESS**

(71) Applicant: ABB SCHWEIZ AG, 5400 Baden (CH)
(72) Inventor: SIVANTHI, Thanikesavan, 5303 Würenlingen (CH); FREGNAN, Enrico, 8046 Zurich (CH); MAAG, Balz, 8953 Dietikon (CH); KOZHAYA, David, 8953 Dietikon (CH); GUO, Shuai, 5400 Baden (CH); SCHOENBORN, Sandro, 4059 Basel (CH)
(74) Representative: Maiwald GmbH

(57) **Abstract**

The disclosure relates to a method (100) for optimizing an industrial automation process, the method comprising:
- obtaining system data of a knowledge database (20), wherein the system data is indicative of a configuration parameter of an automation system;
- generating configuration data using a Robot Process Automation (RPA) unit (30), wherein the configuration data is generated based on the obtained system data;
- validating the generated configuration data in a simulation or test environment (32);
- in a case of discrepancies or errors, providing the configuration data for processing to an Al processing component (40), or to an expert interface (50);
- receiving modified configuration data from the processing by the Al processing component (40), or to the expert interface (50); and
- providing these modified configuration data made by the Al processing component (40), or the expert interface (50) to the knowledge database:

## Description

### TECHNICAL FIELD

The present invention relates to a method for optimizing an automation process, one or more computer program products, and a data processing system.

### BACKGROUND

Industrial automation processes often rely on complex sets of configuration parameters and operational rules. These parameters determine how an automated system, such as a production line or a control system for power equipment, is initially set up and how it operates under various conditions. Traditionally, configuration data has been managed using explicit documentation, such as technical manuals, installation notes, and predefined configuration files, that technicians consult when installing or updating an automated system.

A significant part of successful commissioning and ongoing operation, however, depends on "tacit knowledge" held by experienced engineers and operators. This tacit knowledge includes best practices, insights into why certain parameters work best under particular circumstances, and an understanding of failure modes that are not always detailed in manuals. As systems grow more complex, loss of tacit knowledge, due to staff turnover, retirements, or undocumented processes, can result in errors or inefficiencies. Additionally, standard procedures often fail to anticipate new failure conditions or deviations from expected performance. Consequently, an in-depth understanding of recurring issues and how to correct them is critical to maintaining operational stability and reducing downtime.

Conventional validation and error-correction routines in automation rely heavily on manual workflows. Engineers set up the configuration data or initial configurations based on their experience, and then test or debug them in trial environments. If a particular configuration produces errors or does not align with certain setpoints, engineers typically employ a trial-and-error approach to resolve those issues, often without a systematized process for capturing the adjustments or feeding them back into a central knowledge store. Over time, this manual process can become a bottleneck, limiting both efficiency and scalability.

To address some of these challenges, it is known to use digital approaches like robotic process automation (RPA) for automating repetitive tasks, as well as simulation environments to test or verify system behavior. However, the integration of such a system with advanced knowledge retention or adaptive error correction remains limited in many current implementations. Therefore, the state of practice relies heavily on manual inputs. This shortcoming results in repetitive manual work, difficulty in maintaining consistency across similar applications, and a risk of recurring errors.

Moreover, as industrial automation expands in scope, encompassing diverse equipment types, complex data streams, and varying operational constraints, the existing knowledge repositories risk becoming outdated or incomplete. Simply maintaining and updating traditional databases cannot fully capture the nuanced insights and lessons learned from real-world failures, near-misses, or custom configurations. Accordingly, there is a growing need for more systematic approaches that can capture both explicit and previously under-documented knowledge.

### SUMMARY

The above problem or need is at least partially solved or alleviated by the subject matters of the independent claims of the present disclosure, wherein further examples are incorporated in the dependent claims.

According to an aspect of the present disclosure, there is provided a method for optimizing an industrial automation process, the method comprising:
- obtaining system data of a knowledge database, wherein the system data is indicative of a configuration parameter of an automation system;
- generating a configuration data using a Robot Process Automation (RPA) unit, wherein the configuration data is generated based on the obtained system data;
- validating the generated configuration data in a simulation or test environment;
- in a case of discrepancies or errors, providing the configuration data for processing to an Al processing component, or to an expert interface;
- receiving modified configuration data from the processing by the Al processing component, or to the expert interface; and
- recording the modifications made by the Al processing component, or the expert interface and providing these modifications to the knowledge database.

The term "automation process" may be understood broadly to encompass any series of automated or semi-automated tasks that configure, monitor, or control a system. For example, the automation process may involve the commissioning of devices or systems in industrial settings, the configuration of control parameters in power systems, or even the setup of complex software workflows, or similar. While the automation process may be configured to minimize manual intervention, it does not exclude human participation. In particular, humans, such as a user, may intervene, when necessary, for example, to provide expert input or to review and confirm system outputs. Likewise, Al systems may actively participate in the automation process by making decisions, proposing optimizations, or adapting configurations. Consequently, the automation process may involve human operators, Al components, or both, working in concert to achieve the desired level of efficiency and consistency. Such a process may involve configuring, controlling, operating, monitoring, or managing one or more physical or virtual components, such as manufacturing equipment, power equipment, industrial robots, control systems, or software-based workflows, for example. The main purpose of an automation process may be to perform tasks efficiently, consistently, and reliably, reducing manual effort and the potential for human error.

The method of the first aspect may be an at least partially or fully computer implemented method. This means that at least one, multiple or all the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

A knowledge database may be a storage or management system configured to hold and organize critical information about the automation system. For example, it may include system data. System data may refer to a set of information that characterizes the operational state, configuration, and performance of a system, for example. It may comprise configuration parameters such as device settings, network configurations, control thresholds, and calibration values that define how the system is arranged and operates. System data can be not only one configuration parameter, but also a combination of configuration parameters and/or the configuration of different function/logical blocks and/or the configuration how these blocks/parameters interact with each other, for example. In addition, system data may encompass operational metrics, like throughput, latency, error rates, or power consumption, which provide insights into system performance under various conditions. Sensor readings, which capture real-time environmental or operational conditions, for example, temperature, pressure, or voltage, may also form part of system data. Furthermore, diagnostic information such as error codes and logs, as well as historical data that records previous configurations and performance states, may be part of system data. Thus, the configuration parameters may represent a current or previously validated setting of the automation system. They may include hardware configuration details (e.g., device addresses, control protecting settings, network settings), software or firmware versions, operational thresholds, and other constraints or rules that define how the system is presently set up. These parameters may already reside in the knowledge database, either because they were stored after a prior setup or because they are actively updated from ongoing operations. Additionally, the knowledge database may comprise knowledge sourced from or trained on various materials, such as technical documents, external databases, and online resources related to configuration tasks, for example. The method step of retrieving system data from the knowledge database may involve accessing and collecting these parameters so they can be used by subsequent steps in the automation process.

A Robot Process Automation (RPA) Unit may be a system or software tool capable of automating repetitive or structured tasks that would otherwise require manual intervention. Typically, RPA solutions can be programmed or trained to mimic user interactions with graphical user interfaces, command-line interfaces, or other software systems. By doing so, the RPA unit may systematically create or modify configurations without continuous human oversight.

The RPA unit may leverage the relevant configuration parameters, that have been retrieved from the knowledge database, to construct a first version of configuration data, or initial configuration, for the automation system. Configuration data may be indicative of one or more parameters that define how the automation system is set up and operates, for example. Thus, configuration data may encompass data sets defining the current or intended operational state, arrangement, and logic of an automation system. By way of example, such data may include hardware addresses, network parameters, calibration values, control or protection settings, control thresholds, operational modes, and logical associations between sensors and actuators. In addition, configuration data may incorporate historical or contextual information, such as references to previously validated configurations or version logs, for example. This configuration data may serve as a preliminary setup or template that reflects the current or previously known requirements stored in the knowledge database, for example. The RPA unit may, for example, fill out configuration files, update parameter values in specialized software, or set default operational thresholds based on the retrieved data. These configuration parameters may also comprise scripts, or settings intended to operate the automation system according to retrieved data, for example. it could be any initial set of system settings, control parameters, or even process workflows tailored to the given system state.

The proposed solution or configuration data may be then validated in a controlled environment, such as a simulation or test setup, to determine whether it meets the required performance and operational criteria. A simulation or test environment may be a contained setup, possibly software-based, hardware-based, or both, that replicates or approximates real operational conditions, for example. In a simulation, the configuration might be tested virtually, using models of the automation system's machinery or processes, for example. This may help identify issues without risking actual production downtime or damage to physical equipment, for example. In a test environment, real or simulated signals, inputs, and outputs can be used to confirm whether the configuration performs as anticipated. This environment may be isolated from live operations, so any misconfigurations or failures do not affect any actual process. Validating may involve checking whether the newly created or updated configuration meets certain performance, compatibility, or safety criteria before it is deployed in an actual operational environment, for example.

During the validation in the simulation or test environment, discrepancies or errors may be detected that indicate the configuration data does not meet one or more required criteria, for example. This may mean detecting discrepancies or errors in the validated configuration data. Discrepancies or errors in this context may comprise a variety of issues that indicate the generated configuration deviates from the desired or expected state. Examples may include parameter conflicts, incomplete settings, for example. Once an error is detected, the validation process may stop, and relevant configuration data may be forwarded for further analysis or correction. The relevant configuration data may be forwarded along with any associated diagnostic information about the identified error, for example. This may mean, in response to detecting discrepancies or errors, the configuration data may be provided for processing to an Al processing component. The Al processing component may be responsible for examining the erroneous configuration data, identifying the likely cause of the detected errors, and suggesting or applying changes. This Al processing component may use artificial intelligence techniques (e.g., heuristic analysis, pattern recognition, or machine learning) to determine how to fix or improve the configuration. Specifically, the Al processing component can be realized in various ways and trained on different types of data, allowing it to adapt to the requirements of diverse automation processes. To accomplish these tasks, the Al processing component may rely on one or more machine learning or heuristic algorithms. In some embodiments, a rule-based system can be employed, using predefined rules refined over time to make corrections. In other embodiments, statistical and pattern-recognition techniques, such as neural networks or decision trees, may be applied. These algorithms derive inferences from historical data (e.g., past configurations, proven best practices, or known error-resolution patterns) to propose suitable modifications. Once the Al processing component determines an optimal corrective strategy, it may produce modified configuration data to address the identified issues. Modified configuration data may refer to any set of parameters, thresholds, logical rules, or scripts that have been altered from their original or initial configuration. In other words, modified configuration data may represent any post-modification, correction, or post-validation version of the system's operational instructions. This output may be fed back into the knowledge database, where the modified configuration can be revalidated to ensure that the recommended changes effectively resolve or mitigate the errors, for example. If the proposed solution proves valid, the Al processing component's modifications, along with any intermediate reasoning, can be stored in the knowledge database for reuse. Over time, this process enables the Al component to learn from its successes (and potential failures), progressively improving its diagnostics and corrective strategies.

In certain embodiments, a larger or more complex task may be split into multiple smaller tasks. For example, if the automation process involves creating or updating a migration template, each functional block or logic component may be handled separately, thereby reducing the scope of validation per iteration and allowing more targeted interventions when discrepancies arise. In this context, the system may manage parallel or sequential sub-tasks, each of which is validated independently. Upon successful completion of one sub-task, the system either proceeds to the next sub-task or, if all sub-tasks pass validation, aggregates them into a final, comprehensive configuration.

Further, the Al processing component may utilize reinforcement learning to refine its error-resolution strategies. Reinforcement learning is characterized by an agent (the Al component) that interacts with an environment (the simulation or test environment), receiving feedback in the form of rewards or penalties. After each configuration correction attempt, the agent may observe whether the modifications have improved performance or corrected errors. The agent then may adjust its policy, i.e., the set of decision-making rules, accordingly. Over multiple iterations, the reinforcement learning agent may converge on strategies that maximize rewards, such as consistently generating valid configurations or reducing the time required to arrive at error-free solutions, for example. This approach may be beneficial in scenarios where the optimal corrective actions are not immediately apparent or may evolve alongside changing system conditions, for example. By continuously exploring new modifications and receiving feedback, the Al component may adapt to subtle shifts in the automation process, enhancing both the speed and effectiveness of error resolution.

Rather than sending the erroneous configuration data directly to an Al processing component for correction, the system may instead transmit the data to an expert interface. This expert interface may serve as an interactive platform through which qualified professionals, such as engineers, technicians, or domain specialists, can review and correct the flagged configuration data. In doing so, the system leverages the tacit knowledge of these experts, which is the know-how gained through on-the-job experience, practical troubleshooting, and insights that are often difficult to capture in written documentation. Tacit knowledge may refer to intangible, experience-based expertise that individuals gain through hands-on work, problem-solving, and accumulated insights over time, for example. Unlike explicit knowledge, which is documented in manuals, databases, or instructions, tacit knowledge often remains unwritten, residing primarily in an expert's mind. It can include such as but not limited to contextual insights, heuristic reasoning, practical know-how, best practice knowledge, or similar.

The expert interface can be implemented in various forms. For instance, a Graphical User Interface (GUI) may be deployed as a software application on a local workstation, laptop, or tablet. In this case, the GUI may display relevant parameters, error messages, logs, and status information in a structured manner, enabling the expert to quickly identify and modify problematic entries using tools such as dropdown menus, text fields, or parameter-specific sliders. Alternatively, a web-based dashboard, a browser-accessible portal hosted on a networked server, may be used, allowing experts to connect remotely, view real-time or near-real-time system data, and collaborate on configuration updates through secure authentication. In another embodiment, the interface may be integrated directly into specialized engineering software environments (such as SCADA or PLC configuration platforms), facilitating seamless intervention within the familiar context of the design tool. By embedding the interface directly into familiar software, the method may require minimal retraining and avoids disrupting existing workflows. This seamless integration may prove particularly advantageous for third-party customers, who can incorporate the invention's capabilities, such as automated parameter generation, expert intervention, and tacit knowledge capture, without abandoning their preferred development or control platforms.

Upon detecting a configuration error during validation, an interactive mode may be initiated in which the configuration data is directed to the expert interface. Here, experts may observe the detailed, erroneous configuration and, at any point in the automated workflow, pause the process to make adjustments. They can directly modify parameter values, alter logic blocks, or introduce specific thresholds based on their domain-specific experience. These manual interventions are recorded in real time by the system. The experts may leverage their domain-specific experience to correct parameter values, modify logic blocks, or introduce nuances, e.g., special thresholds. Thus, the system may capture each expert modification, along with any accompanying notes or justifications, and stores these in the knowledge database. By recording not only what was changed but also why, the platform may systematically convert tacit knowledge into machine-readable information. For example, this approach may enhance traceability, allowing future users or automated routines to reference past solutions, and fosters a self-improving loop. Each successfully resolved error may inform and refine subsequent configuration tasks.

Once the configuration data has been modified or corrected, whether via the Al processing component or through expert intervention, or a combination thereof, the modified configuration data may be received by the knowledge database. Modified configuration data may be indicative of newly validated or updated parameters, settings, or relationships within the automation system. For instance, it may encompass revised threshold values, adjusted operational modes, or additional references that reflect corrections made by the Al processing component or human experts. This modified configuration may be logged and integrated into the knowledge database, creating a closed-loop update process. In addition to storing the final parameters, the database also captures the rationale or justification behind each change. By preserving both what was modified and why, the system ensures traceability for future reference and provides explainability when revisiting or auditing decisions. As a result, subsequent configuration tasks can benefit from the accumulated domain knowledge, leading to enhanced accuracy, efficiency, and overall quality in the automation process.

Thus, the invention may address the difficulty of capturing and utilizing both explicit and tacit knowledge in the commissioning and optimization of automation systems. This problem may be solved by creating a self-improving, automated configuration process.

In an example, the expert interface may comprise a gamification platform configured to capture tacit knowledge. A gamification platform may refer to a software module or environment that applies game-like mechanics, such as point systems, levels, badges, timed challenges, and leaderboards, for example. For instance, when the RPA detects a validation failure, it may set up "game elements". This may mean, each unresolved error or needed configuration correction may be treated as a "task" or "challenge" with parameters such as complexity level, reward points, and success criteria. A pool of enrolled experts may then opt to tackle these tasks, knowing that upon successful completion (i.e., once their revised configuration data passes validation), they will earn points or other rewards. These points may be tracked in a leaderboard displayed, creating a transparent system of recognition, and encouraging competition or collaboration among experts. The gamification platform thus goes beyond merely displaying tasks. It may also collect any updates the expert makes, tracks time and complexity, and integrates that data back into the knowledge base. As experts resolve more complex issues, they both accumulate points and contribute deeper insights, ultimately accelerating the transfer of tacit knowledge into explicit, machine-usable form. The system may prompt each expert to provide a concise rationale or explanation for their modifications. This rationale, once confirmed, may be logged alongside the updated configuration data, thereby converting the expert's tacit reasoning into explicit, machine-usable form. To encourage thorough documentation, the gamification platform may assign additional reward points or a higher weight to modifications accompanied by detailed justifications. As a result, the knowledge base may benefit not only from the final corrections but also from the underlying insights that guided them. Each task may be assigned a certain weight, reward value, and complexity rating, or similar. When an expert volunteers to solve a task, the interactive mode may be launched, allowing step-by-step adjustments to the relevant portion of the configuration data. This combined approach, an interactive mode for direct expert corrections coupled with a gamification mechanism for structured task management and motivation, may address the challenge of capturing and preserving tacit knowledge. The experts' modifications and insights may become part of a continually evolving knowledge repository, enabling faster, more accurate commissioning or configuration workflows. Thus, the incorporation of a gamification platform may systematically transform unstructured, experience-based (tacit) knowledge into structured data, which the system may then process and store in its knowledge base. Because tacit knowledge may be inherently personal and difficult to articulate, capturing it requires intentional strategies, such as prompting experts to annotate their changes or provide rationales for deviations, so that these nuanced insights can be converted into explicit, machine-usable data. The knowledge base may therefore be continuously enriched with expert-driven, machine-usable information.

In an example, the discrepancies or errors detected during the validation step may comprise deviations from one or more setpoints. Setpoints may refer e.g., to predetermined target values or thresholds for specific configuration parameters that define the desired operational state of an automation system. During the validation step, the generated configuration may be compared against these setpoints, and any deviation from the expected values is flagged as an error, for example. Such discrepancies may manifest in various forms: for example, numerical parameters like temperature, pressure, or voltage might differ from their specified target values, either by exceeding or falling short of them. Additionally, if a parameter may expect to remain within a defined range and the configuration assigns a value outside this range, this too represents a deviation. Moreover, a missing or incomplete parameter, where a specific value should be provided, may also constitute an error. Even logical or functional mismatches, where the configuration does not reflect the correct state as defined by the setpoints, for instance, a system that should be "active" but is configured as "inactive", may be considered as discrepancies. Overall, any such deviation from one or more setpoints may indicate that the configuration does not fully comply with the established operational criteria.

In an example, the modifications to the configuration data may be analyzed by a machine learning model and converted into rule based, machine-readable configuration rules. The machine learning model may be configured to identify patterns and correlations within the modifications relative to the errors originally detected during the validation step, for example. This analysis may involve feeding historical modification data, including parameter adjustments and contextual metadata, such as e.g., the nature of the error, time of correction, and environmental conditions, into the model. The model, which could be based on techniques such as decision trees, large language models (LLMs), neural networks, or other pattern recognition algorithms, may learn to distinguish which modifications effectively lead to successful configuration outcomes, for example. Once the machine learning model has identified consistent patterns in the modifications, it may convert these patterns into rule-based, machine-readable configuration rules. This transformation process may involve formalizing the learned relationships into logical if-then rules or structured decision criteria. For example, if the model consistently observes that increasing a certain parameter by a fixed percentage resolves a particular type of error, it may generate a rule that can be automatically applied in future configurations encountering the same issue. These generated rules may then be formatted in a machine-readable manner, e.g., using standardized data formats such as XML, JSON, or similar protocols. In subsequent automation processes, when a similar error or discrepancy is detected, the system can reference these rule-based configuration rules to automatically adjust the configuration data. Thus, the system may benefit from a continuously evolving knowledge base, where tacit insights from past modifications are converted into explicit, reusable rules that enhance the efficiency and accuracy of future configurations. The machine-readable configuration rules may be stored in the knowledge database. The configuration rules, which may be derived from the analysis and conversion of recorded modifications, may be formatted in a way that enables automated systems to easily interpret and apply them, e.g., using standardized data formats such as XML or JSON, for instance. The knowledge database may serve as a centralized database that is continuously updated in real time. This may ensure that whenever a new automation process is initiated, the most up-to-date configuration rules are readily accessible. As subsequent automation processes are executed, the RPA unit or other system components can query this repository to retrieve optimized rules, allowing them to generate new configurations that incorporate the latest improvements and learnings from past modifications. This centralized storing in the knowledge database may facilitate efficient retrieval and immediate application during runtime, for example.

In an example, the method may further comprise an additional validation step wherein, the modified configuration data is validated in a simulation or test environment. the simulation or test environment is designed to closely replicate the actual operational conditions of the target automation system. This environment may be implemented as a digital twin, a hardware-in-the-loop test bench, or a software-based simulation platform, for example. The modified configuration data may be loaded into this environment, where a series of tests are conducted, for example. These tests may include verifying that all parameter values adhere to their defined setpoints and operational thresholds, and that the system's dynamic behavior, such as response times, feedback loops, and interaction between components, meets the expected performance criteria.

During this validation step, performance metrics may be continuously monitored, and the observed outputs compared against the predicted outcomes derived from the simulation model. Advanced error-detection algorithms may be employed to identify any discrepancies, such as minor deviations in parameter values or unexpected system responses, for example. In addition, the test environment may simulate a range of operating scenarios, including edge cases, to ensure the robustness of the modified configuration.

If the revalidation confirms that the modifications successfully resolve the initial errors and the system operates within the acceptable range of performance, the modified configuration may be deemed valid. Conversely, if the validation reveals further discrepancies, the process may trigger additional corrective measures, either by reprocessing the configuration data through the Al component or by invoking the interactive mode for human expert intervention, for example.

Finally, the results of this additional validation step may be logged and integrated into the knowledge database. This may not only provide a historical record of modifications and their outcomes but also supports continuous improvement of the system's configuration and the underlying error correction algorithms.

In an example, the simulation or test environment may automatically compare the modified configuration data with previously stored errors. The simulation or test environment may not only be used to validate the modified configuration data against expected outcomes but also to automatically compare it with a repository of previously stored error cases. Errors or error cases may refer to historically documented failures, misconfigurations, or other undesired system states that have been recorded, e.g., in the knowledge base or associated logs, based on previous validation or operational experiences. For instance, such error cases may include instances in which a certain parameter setting caused instability or a specific combination of configuration parameters led to device communication failures. For example, the test environment may simulate real operating conditions and runs tests using the modified configuration. During these tests, it may collect performance metrics, system responses, and any deviation from the expected behavior. Concurrently, it may retrieve historical error cases, such as e.g., records of past configuration errors, including their characteristics and the conditions under which they occurred, from the knowledge database. An algorithm within the simulation environment may perform e.g., a pattern-matching analysis between the current test outputs and the stored error cases. This may involve comparing numerical values, logical states, or even error codes to determine whether the current modified configuration exhibits similarities to previously identified issues. In some embodiments, fuzzy matching techniques or threshold-based comparisons may be employed to account for variances while still recognizing recurring error patterns, for example.

By automatically flagging any reoccurrences of known errors it may be quickly determined whether the applied modifications have successfully resolved the issues, for example. If the modified configuration still exhibits characteristics similar to past error cases, the system can trigger further corrective actions-either by reprocessing the configuration data through the Al component or by invoking human intervention via the interactive mode. Overall, this automatic comparison may ensure a robust feedback loop, reducing the likelihood of recurring errors and contributing to the continuous improvement of the configuration process.

In an example, the knowledge database may aggregate configuration modifications from multiple sources, comprising at least one or more of: technical documentation, historical process data, and expert inputs. Once errors have been recognized and corrected in the process, whether by automatic processing using the Al component or by manual intervention via the interactive mode, e.g., via the expert interface, the modifications made may be logged. The knowledge database may aggregate these modifications together with other relevant sources of information, such as technical documentation, historical process data and the adjustments made by experts, for example. This may create a comprehensive data set that contains all recorded modifications. This data set may serve as the basis for future configurations and helps to continuously optimize the system, for example.

In an example, the modified configuration data may enable an automatic generation of parameter suggestions for similar automation tasks. The modified configuration data, resulting from either Al processing or expert intervention, may be recorded, and leveraged to automatically generate parameter suggestions for future automation tasks. For example, once the modifications have been validated and integrated into the knowledge database, these changes may be analyzed to identify patterns or rules that consistently led to improved performance. This analysis may be achieved through machine learning techniques or rule-based logic that transforms the recorded modifications into a set of parameter recommendations, for example. For instance, when a similar configuration task is initiated later, the RPA unit may access the knowledge database, where these optimization rules are stored. The RPA unit may then automatically incorporate the recommended parameter values into the new configuration process, ensuring that the previous successful optimizations are directly applied, for example. This closed-loop feedback mechanism may reduce the need for manual intervention in future tasks. This closed-loop feedback mechanism may also continuously improve the configuration quality by building on historical successful modifications.

In an example, the method may further comprise continuously updating the Al processing unit's learning model with newly recorded modifications. This may mean, that the Al processing unit's learning model is continuously updated with the modifications. For example, every time configuration errors are corrected or modified, whether through automated Al adjustments or human expert interventions, the resulting modifications may be stored in the knowledge database. These modifications may serve as new data points that reflect e.g., successful error resolutions. The Al processing unit's learning model may then leverage this accumulated data to adjust its internal parameters and improve its ability to predict and correct errors in future configurations, for example. In other words, by continuously feeding the model with correction data, a decision-making process may be refined, leading to enhanced accuracy and efficiency in subsequent error-correction cycles, for example.

In an example, the modified configuration rules are automatically applied to generate future configurations for an automation process. For example, when a new automation task is initiated, the RPA unit (or an equivalent configuration generator) may automatically query the central repository for the most up-to-date, rule-based configuration guidelines. These rules may be retrieved and integrated with the current system data to generate a new configuration that reflects all previously learned optimizations, for example. This may be performed without requiring any manual intervention. This automatic application of learned, rule-based optimizations may enhance process efficiency by reducing human effort and minimizes the risk of recurring errors, thereby ensuring consistency and improved performance in the overall automation process. Additionally, the automation process may become more efficient and reliable over time, as the accumulated experience, captured in the form of machine-readable rules, may be directly embedded into the configuration generation process.

In an example, the Al processing component may determine a confidence score for each modified configuration. The Al component may e.g., assign a confidence score to each modified configuration based on various metrics, such as the consistency of the changes with historical data, error resolution effectiveness, and compliance with predetermined operational criteria. If the confidence score may exceed a predetermined threshold, the modified configuration may be automatically accepted and recorded, for example. However, if the confidence score falls below the threshold, the processing by the Al processing component may start again. Alternative, or after a few attempts for processing by the Al component, a transition to an interactive mode may be performed, where e.g., human experts are alerted and provided with the configuration data, allowing them to review, adjust, and manually correct the modifications. This may ensure that only reliable, high-confidence modifications are automatically integrated. Lower-confidence cases may e.g., benefit from expert intervention, thereby enhancing overall accuracy and robustness in the configuration process.

In an example, the RPA unit may dynamically adjust its configuration generation parameters based on feedback from at least one of the Al processing units, the expert interface, or the simulation or test environment. This may mean that the RPA unit may receive continuous input regarding the effectiveness and accuracy of the configurations it generates. For example, the Al processing unit might analyze the modifications and determine that certain parameter adjustments consistently result in improved outcomes, or that particular values lead to recurring errors. In addition, the expert interface may supply e.g., domain-specific insights or justifications that prompt the RPA unit to refine its approach. Additionally, the simulation or test environment may provide performance metrics and error reports that indicate whether the generated configurations are operating within the desired range. With this feedback, the RPA unit may automatically refine its internal algorithms and adjust the rules, or parameter ranges it uses during configuration generation, for example. This may result in a more resilient and self-improving system that minimizes manual intervention and enhances overall efficiency, for example.

In an example, the method may further comprise logging performance metrics and error correction outcomes for subsequent analysis and optimization of the automation process. For example, quantitative performance indicators, such as processing times, error frequencies, success rates of configuration validations, and system response metrics, which offer insights into how well the current configuration process is performing, may be recorded. Additionally, records of each error correction or modification to the system data, whether by the Al processing component or through human expert intervention, confidence scores, and the results of subsequent validation tests, may be maintained. These logged data points may serve as a historical repository that can be analyzed using data analytics or machine learning techniques to identify recurring issues, validate successful correction patterns, and refine the underlying algorithms, for example. By systematically logging and analyzing these metrics and outcomes, the system may be able to continuously improve its configuration generation and error correction processes, leading to a more robust, efficient, and adaptive automation process over time.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows schematically shows a system for optimizing an automation process,
Figure 2 shows schematically shows another embodiment of a system optimizing an automation process, and
Figure 3 shows a method for optimizing an automation process, and
Figure 4 shows schematically a data processing system.

The Figures are schematic only and not true to scale. In principle, identical or like parts, elements and/or steps are provided with identical or like reference numerals in the Figures.

### DETAILED DESCRIPTION OF THE INVENTION

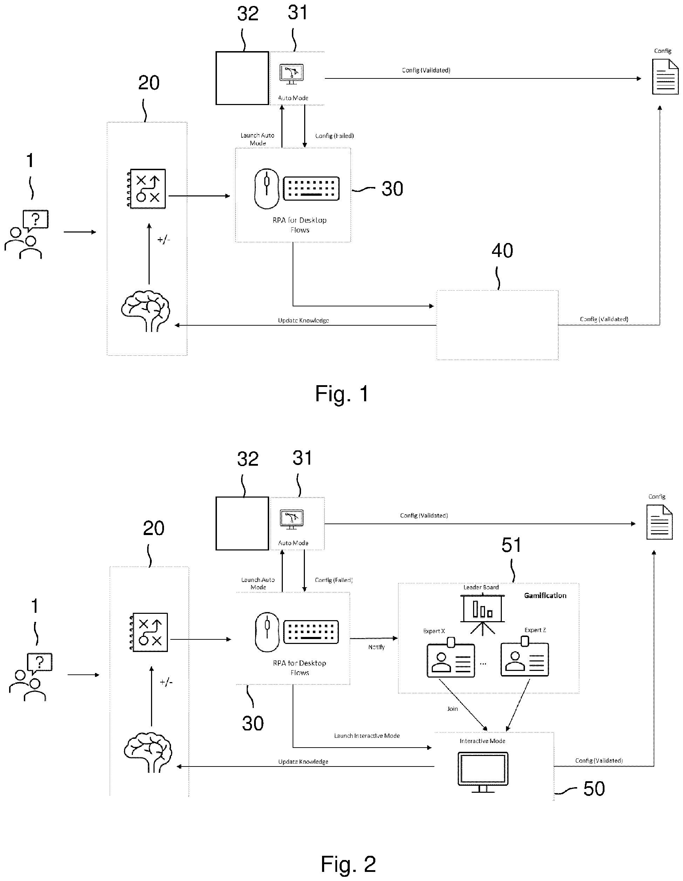

Figure 1 schematically shows a process flow for optimizing an automation process. A user 1 submits a query, for example requesting certain device settings or configurations, to a central knowledge database 20. This knowledge database 20 may hold system data such as configuration parameters, technical manuals, and historical configurations, collectively representing both explicit documentation (e.g., manuals, known best practices) and previously recorded configuration states (e.g., logs of parameter changes or prior setups). By preserving these data points, the knowledge database 20 may provide a comprehensive view of how the automation system has been configured over time, enabling more accurate generation and validation of new configurations. When the user's 1 query arrives, the knowledge base 20 retrieves relevant "desktop flows" from the stored system data and forwards them to a Robot Process Automation (RPA) unit 30.

The RPA unit 30 then launches the required engineering tools, e.g., configuration software, and simulates user interactions, such as mouse clicks or keystrokes, in auto mode 31 to generate configuration data automatically. Once the RPA 30 has generated this configuration data based on the system data, it is provided to a separate simulation or test environment 32 to validate whether the data meets the required operational or safety criteria, for example. If the validation confirms that the configuration data meets the required operational or safety criteria, the configuration is returned to the user 1 for deployment.

However, if the validation step reveals discrepancies or errors, such as logic errors, parameter conflicts, out-of-range values, or deviations from setpoints, or similar, the configuration data may be flagged as invalid, for example. The erroneous configuration data is then transmitted to an Al processing component 40. This Al component 40 may analyze the error, references prior successful solutions or best practices within the system data, and propose modifications. In some embodiments, it may also generate a confidence score for each proposed modification. Once the revised configuration is returned from the Al processing component 40, it may undergo a second validation in the simulation or test environment 32. If it passes, the updated parameters are retrieved to the knowledge database 20, ensuring that the system may learn from each successful correction. If errors persist, the Al processing component 40 may attempt further adjustments, or the process may transition to an interactive mode, where human experts can provide additional corrections, for example.

Figure 2 schematically shows another embodiment of a process flow for optimizing an automation process with an interactive mode. If in this scenario the validation step reveals discrepancies or errors, such as parameter conflicts, out-of-range values, or deviations from setpoints, the configuration data may be flagged as invalid an interactive mode 50 is engaged. In this mode, human experts may intervene to correct and optimize the configuration. In the interactive mode 50, domain experts may be allowed to intervene manually when an automatically generated configuration fails validation, for example. Rather than relying solely on automated corrections, the RPA unit 30 replays the same steps it performed in auto mode but pauses at critical junctures to enable real-time adjustments, for example. During these pauses, experts can modify parameter values, alter logic blocks, or apply specialized thresholds that reflect their tacit knowledge, insights typically acquired through hands-on experience rather than formal documentation. Every modification may be recorded, including annotations explaining the rationale behind it. Once the expert finishes, a validation may be attempted again; if successful, the modified configuration may be saved in the knowledge base 20 for future use, preserving the expert's contributions and gradually refining the overall automation process, for example.

To encourage and manage expert participation, a gamification platform 51 is integrated into the workflow. For example, when an erroneous configuration is detected, the error may be registered as a "task" or "challenge" on the gamification platform 51, assigning attributes such as complexity levels, reward points, and success criteria. Registered experts can then claim these tasks, and upon successfully validating their modifications, they earn points or badges displayed on a leaderboard, for example. This transparent reward system may not only motivate individual experts to contribute but also fosters a collaborative environment in which multiple experts can share knowledge and compare solutions, for example. Over time, the gamification platform 51 aggregates performance data and expert interventions, which are further integrated into the knowledge database 20. By uniting interactive configuration corrections with a structured incentive system, the solution may systematically capture tacit knowledge and improves commissioning workflows in a sustainable, scalable manner, for example.

Once the expert's modifications have been validated and the gamification rewards allocated, the knowledge database 20 may be updated with the newly confirmed configuration data. These records may include the specific logic changes, parameter changes, any annotations provided by the expert, and relevant performance metrics from the validation. By integrating these insights, the system 10 may effectively learn from each successful intervention. From there, the updated knowledge database 20 may become the starting point for future automation tasks. For example, if a similar configuration challenge arises, the RPA unit 20 may leverage these stored modifications to either generate a more accurate configuration data or automatically resolve known discrepancies. Over time, this iterative loop, combining automated generation, human expertise, and structured feedback, may continually refines the system's overall accuracy.

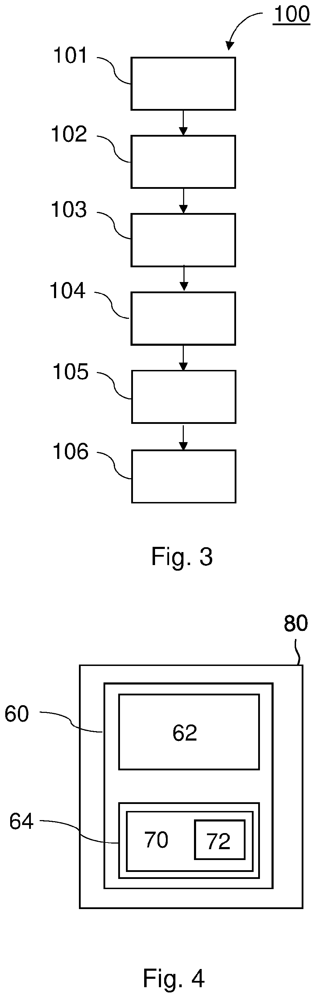

Figure 3 shows a method for optimizing an automation process.

In a first step 101, system data is obtained from a knowledge database 20. This system data may be indicative of one or more configuration parameters for the automation system. By accessing these parameters, which may include historical settings, device configurations, or operational thresholds, the method may ensure that the subsequent configuration process is grounded in accurate and up-to-date information.

In a second step 102, configuration data is generated by a Robot Process Automation (RPA) unit 30, wherein the RPA unit 30 may systematically apply the retrieved system data to produce a first version or initial version of the configuration. By automating mouse actions, keystrokes, or equivalent commands, in an auto mode 31 the RPA unit 30 may minimize manual intervention and ensures a consistent approach to setting or updating configuration parameters.

In a third step 103, the generated configuration data is validated in a simulation or test environment 32. This environment 32 may replicate or approximates the operational conditions of the automation system, allowing the method to check for errors, conflicts, or deviations from expected performance criteria. Should the validation confirm the configuration's accuracy, the method may proceed to deployment or other concluding processes.

In a fourth step 104, in the event that discrepancies or errors are detected during validation, such as parameter conflicts, missing values, or out-of-range settings, the configuration data is provided to an Al processing component 40. The Al processing component 40 may be responsible for diagnosing the underlying cause of the discrepancy and suggesting or applying one or more corrective measures.

In a fifth step105, the knowledge database 20, upon validation of the modified configuration data produced by 40, receives the configuration. These modifications aim to address any detected errors or inefficiencies. Depending on the design, the Al processing component 40 may use machine learning algorithms, heuristic methods, or rule-based logic to arrive at improved configuration parameters.

In a sixth step 106, the modifications made by the Al processing component 40 are recorded and integrated into the knowledge database 20. By updating the database 20 with these newly validated adjustments, it may be ensured that future configuration processes can benefit from the captured improvements, thereby continuously enhancing the accuracy and reliability of subsequent automated configurations.

Alternatively, the method may transition to an interactive mode 50 if either the Al processing component 40 cannot adequately resolve the discrepancies or if the system determines that expert intervention is desirable, for example. The Al Processing Component 40 may not be involved at all.

The system data may be then presented to one or more human experts through an interactive interface. This interface may be paired with a gamification platform 51 or reward system. These experts may review the flagged configuration parameters, make manual adjustments, and annotate their changes. The method records these interventions, capturing tacit knowledge that might not be formally documented elsewhere.

The updated system data, now refined by expert inputs, may be validated again in the simulation or test environment 32. If the newly modified configuration passes this validation, the successful changes or modifications may be recorded. Otherwise, the expert(s) may be notified of any residual issues, prompting additional revisions, for example.

The expert-derived modifications may then be integrated into the knowledge database 20. Over time, this creates a self-improving loop, wherein both automated algorithms and human expertise continually refine the baseline knowledge used for subsequent configurations.

Figure 4 schematically shows a data processing system 80, which may comprise one or more data processing apparatuses 60, for example local or remote servers. The data processing system 80, in particular the data processing apparatuses 60 and their processor 62, may be used to carry out the method 100 for optimizing an automation process, as schematically illustrated in Figure 1. The data processing apparatus 60 comprises at least one processing unit or processor 62 (e.g., a CPU) and at least one computer program product 64 (e.g., a computer-readable storage medium). A computer program 70 is stored on the computer program product 64.

In this example, a processing component 72 of the computer program 70 is provided within the data processing system 80, and may form part of the computer program 70, namely different program code or algorithms for different functions or steps of the method 100. Specifically, a computer program 70 executed by one of the data processing apparatuses 60 may include a processing component 72 in the form of software instructions for the processor 72, covering, for instance, tasks such as Robot Process Automation (RPA) flows, Al-driven corrections, knowledge-base queries, or the gamification platform 51. The data processing system 80 may be a distributed computing environment, where multiple data processing apparatuses 60 each handle different parts of the workflow, or it may be executed on a single data processing apparatus 60, depending on the particular setup of the automation process.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (100) for optimizing an industrial automation process, the method comprising:
- obtaining system data of a knowledge database (20), wherein the system data is indicative of a configuration parameter of an automation system;
- generating configuration data using a Robot Process Automation, RPA, unit (30), wherein the configuration data is generated based on the obtained system data;
- validating the generated configuration data in a simulation or test environment (32);
- in a case of discrepancies or errors, providing the configuration data for processing to an Al processing component (40), or to an expert interface (50);
- receiving modified configuration data from the processing by the Al processing component (40) or the expert interface (50); and
- providing these modified configuration data made by the Al processing component (40) , or the expert interface (50) to the knowledge database (20).

2. The method of claim 1, wherein the expert interface (50) comprises a gamification platform configured to capture tacit knowledge.

3. The method (100) of claim 1 or 2, wherein the discrepancies or errors detected during the validation step include deviations from one or more setpoints.

4. The method (100) of any one of the preceding claims, wherein the configuration data are analyzed by a machine learning model and converted into rule-based, machine-readable configuration rules.

5. The method (100) of any one of the preceding claims, further comprising an additional validation step wherein, the modified configuration data is validated in the simulation or test environment (32).

6. The method (100) of any one of the preceding claims, wherein the simulation or test environment (32) automatically compares the modified configuration data with previously stored errors.

7. The method (100) of any one of the preceding claims, wherein the knowledge database aggregates configuration changes from multiple sources, comprising at least one or more of: technical documentation, historical process data, and expert inputs.

8. The method (100) of any one of the preceding claims, wherein the modified configuration data enable an automatic generation of parameter suggestions for similar automation tasks, such that future configurations are generated by the RPA unit (30) directly incorporating previous optimizations.

9. The method (100) of any one of the preceding claims, further comprising continuously updating the Al processing unit's (40) learning model with newly recorded modifications.

10. The method (100) of any one of the preceding claims, wherein the modified configuration rules are automatically applied to generate future configurations for an automation process.

11. The method (100) of any one of the preceding claims, wherein the Al processing unit (40) determines a confidence score for each modified configuration, and modifications with a confidence score above a predetermined threshold are automatically accepted and recorded.

12. The method (100) of any one of the preceding claims, wherein the RPA unit (30) dynamically adjusts its configuration generation parameters based on feedback from at least one of the Al processing units (40), the expert interface (50), or the simulation or test environment (32).

13. The method (100) of any one of the preceding claims, further comprising logging performance metrics and error correction outcomes for subsequent analysis and optimization of the automation process.

14. One or more computer program products (4, 70) comprising instructions which, when executed by one or more data processing apparatuses (60), cause the one or more data processing apparatuses (60) to carry out the method (100) of any one of the previous claims.

15. A data processing system (80) configured to carry out the method (100) of any one of claims 1 to 13.
